# EUROPEAN PATENT APPLICATION

(11) **EP 4 212 453 A1**
(43) Date of publication of application: **19.07.2023**
(21) Application number: 21866145.2
(22) Date of filing: 13.09.2021
(51) Int. Cl.: B65D 65/08, B65B 11/00, B65B 25/00, A47G 21/00

(54) **FOLDABLE FOOD PACKAGE**

(30) Priority: 11.09.2020 ES 202031987 U
(71) Applicant: Marcadiferencia, S.L., 08013 Barcelona (ES)
(72) Inventor: HERNÁNDEZ CUGAT, Meritxell, 08013 Barcelona (ES)
(74) Representative: Pons
(86) International application number: PCT/ES2021/070656
(87) International publication number: WO 2022/053734

(57) **Abstract**

The invention relates to a foldable food package enabling the transport of foodstuffs, which is re-usable, easily carried and environmentally friendly. The package comprises a flexible, foldable laminar body (1), intended to contain the foodstuff when in a folded situation, a tape (7) featuring a fixed section (8) partially attached to the laminar body (1) which extends as far as at least one first lateral section (5) and is equipped with a plurality of adjacent eyelets (9) and an attachment element (10) that extends from the second lateral section (6), configured to be partially inserted into at least one of the eyelets (9) in a folded situation and to maintain the folded situation of the laminar body (1).

## Description

### OBJECT OF THE INVENTION

The present invention relates to a food package, intended for storing and transporting food, where the package is equipped with a flexible, foldable laminar body, which contains the foodstuff when in a folded situation and is maintained in the folded situation as a result of a tape and an attachment element that can be attached to the tape.

More specifically, the present invention relates to a foldable food package for the storage and transport of foodstuffs, which is re-usable and easily carried. In addition, it is an environmentally friendly product since all its elements are completely biodegradable.

### BACKGROUND OF THE INVENTION

Foldable food packages are known in the state of the art, said packages being intended to house food for convenient storage and transport. Generally, packages of this type are used to accommodate small-sized foods such as sandwiches, pieces of fruit, etc.

The most advantageous feature of these packages is that they can be reused countless times and are easy to clean. Products of this types can be made from natural materials, which make the product a sustainable package.

However, the binding or attachment means used to close the product are usually of the zipper or Velcro^{®} type, so the are not entirely sustainable.

### DESCRIPTION OF THE INVENTION

More specifically, the present invention discloses a foldable food package, intended for the storage and transport of food, where the package comprises a flexible, foldable laminar body, intended to contain the foodstuff when in a folded situation, where the laminar body comprises an internal surface intended to be in contact with the food, an external surface opposite the internal surface and a perimeter edge that delimits the internal surface and the external surface, comprising a first lateral section and a second lateral section facing the first lateral section. Additionally, the package comprises a tape featuring a fixed section partially attached to the external surface which extends as far as at least one first lateral section and is equipped with a plurality of contiguous eyelets and an attachment element that extends from the second lateral section, configured to be partially inserted into at least one of the eyelets in a folded situation and to maintain the folded situation of the laminar body.

In this way, the laminar body is maintained in a folded situation by means of the attachment element and the tape with eyelets, the attachment element being able to be attached to one of several eyelets so that it can be easily adapted to the size of the food. More specifically, this configuration allows both the attachment element and the tape to be made of sustainable materials since the attachment is formed as a result of the shape of the eyelets and the attachment element, being able to use a plurality of materials without affecting the quality of the attachment. Thus, the tape can be made of a textile material and the attachment element can be a button or pin type solution.

Preferably, the attachment element may comprise a button configured to pass through the eyelet and a binding strip partially housed in the eyelet in a folded situation and attached to the button and to the second lateral section. The button fastens easily into the eyelets on the tape. Thus, for example, the binding strip can be elastic, like an elastic cord, and maintain the laminar body in a folded situation by means of a tighter binding. Additionally, the button can be made of wood and the binding strip is a natural fiber rope.

The tape can comprise a free section that protrudes from the first lateral section so that the laminar body can contain larger foods in a folded situation. The fixed section can be attached to the external surface by means of a seam arranged between the eyelets in the transverse direction with respect to the fixed section so as to ensure that the tape does not detach from the laminar body, and furthermore, the seam can be made with a thread of sustainable material without needing to use synthetic glues.

The laminar body can comprise an outer layer delimited by the external surface, an inner layer delimited by the internal surface, and a thermal insulation layer arranged between the inner layer and the outer layer so as to preserve the temperature of the food.

The binding strip can be arranged between the outer layer and the insulation layer in such a way that when attaching the layers, the binding strip is also attached, saving an additional operation of gluing the strip.

The laminar body can have an essentially polygonal geometry that facilitates its folding.

### DESCRIPTION OF THE DRAWINGS

As a complement to the description provided herein, and for the purpose of helping to make the features of the invention more readily understandable, in accordance with a preferred practical exemplary embodiment thereof, said description is accompanied by a set of drawings constituting an integral part of the same, in which by way of illustration and not limitation, the following has been represented:
Figure 1 shows a perspective view of a foldable package in an unfolded situation.
Figure 2 shows a perspective view of a foldable package in an intermediate folded situation.
Figure 3 shows a perspective view of a foldable package in a folded situation.
Figure 4 shows a longitudinal section view of the package.

### PREFERRED EMBODIMENT OF THE INVENTION

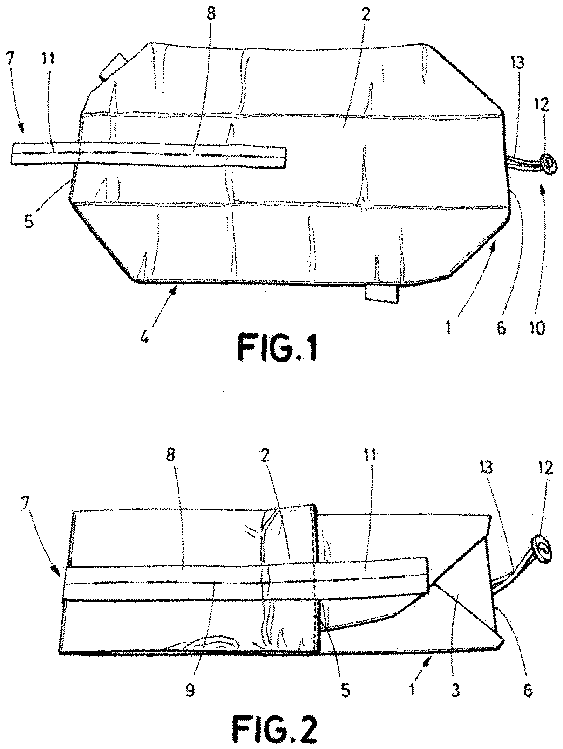

Figure 1 shows a perspective view of a foldable package in an unfolded situation, according to the present invention. The package comprises a flexible, foldable laminar body (1), intended to contain the foodstuff when in a folded situation, and the laminar body (1) in turn comprises an internal surface (3) intended to be in contact with the food, an external surface (2) opposite the internal surface intended to be oriented towards an exterior, a perimeter edge (4) that delimits the internal surface (3) and the external surface (2), where the perimeter edge (4) comprises a first lateral section (5) and a second lateral section (6) facing the first lateral section (5).

Additionally, in order to maintain the folded position of the laminar body (1), the package comprises a tape (7) featuring a fixed section (8) partially attached to the external surface which extends as far as at least one first lateral section (5) and is equipped with a plurality of adjacent eyelets (9) and an attachment element (10) that extends from the second lateral section (6), configured to be inserted into at least one of the eyelets (9) in a folded situation and to maintain the folded situation of the laminar body.

Figure 2 shows a perspective view of a foldable package in an intermediate folded situation, according to the present invention. In this situation, the food is housed in contact with the internal surface (3) inside the semi-folded laminar body (1). The tape (7) comprises a free section (11) that protrudes from the first lateral section (5) and the fixed section (8) is attached to the external surface (2) by means of a seam arranged between the eyelets (9) in the transverse direction with respect to the tape (7).

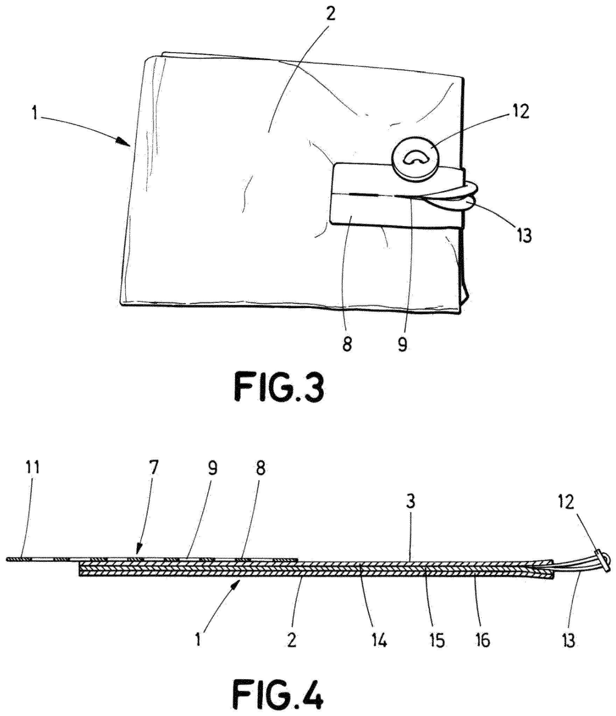

Figure 3 shows a perspective view of a foldable package in a folded situation, according to the present invention, where the food is covered by the laminar body (1) and the laminar body maintains its folded position as a result of the attachment between the attachment element (10) and the tape (7). Preferably, the attachment element (10) comprises a button (12) that goes through the eyelet (9) in the assembly and a binding strip (13) that is partially housed in the eyelet (9) in a folded situation and is attached to the button (12) and to the second lateral section (6).

Figure 4 shows a longitudinal section view of the package, according to the present invention, where it can be seen that the laminar body (1) comprises an outer layer (14) delimited by the external surface (2), a thermal insulation layer (15) configured to preserve the temperature of the food, and an inner layer (16) delimited by the internal surface (3). One end of the binding strip (13) of the attachment element (10) is attached in the vicinity of the second lateral section (6) and is arranged between the outer layer (14) and the insulation layer (15).

## Claims

1. A foldable food package, intended for the storage and transport of food where the package comprises:
- a flexible, foldable laminar body (1), intended to contain the foodstuff when in a folded situation, where the laminar body (1) comprises:
∘ an internal surface (3) intended to be in contact with the food,
∘ an external surface (2) opposite the internal surface (3);
∘ a perimeter edge (4) that delimits the internal surface (3) and the external surface (2), comprising a first lateral section (5) and a second lateral section (6) facing the first lateral section (5),
**characterized in that** it additionally comprises:
- a tape (7) featuring a fixed section (8) partially attached to the external surface (2) which extends as far as at least one first lateral section (5) and is equipped with a plurality of adjacent eyelets (9),
- an attachment element (10) that extends from the second lateral section (6), configured to be partially inserted into at least one of the eyelets (9) in a folded situation and to maintain the folded situation of the laminar body (1).

2. The package according to claim 1, wherein the attachment element (10) comprises a button (12) configured to pass through the eyelet (9) and a binding strip (13) partially housed in the eyelet (9) in a folded situation and attached to the button (12) and to the second lateral section (6).

3. The package according to claim 2, wherein the button (12) is made of wood and the binding strip (13) is a natural rope.

4. The foldable package according to claim 1, wherein the tape (7) comprises a free section (11) that protrudes from the first lateral section (5).

5. The package according to claim 1, wherein the fixed section (8) is attached to the external surface (2) by means of a seam arranged between the eyelets (9) in the transverse direction with respect to the fixed section (8).

6. The package according to claim 1, wherein the tape (7) is made of a textile material.

7. The package according to claim 1, wherein the laminar body (1) comprises an outer layer (14) delimited by the external surface (2), an inner layer (16) delimited by the internal surface (3) and a thermal insulation layer (15) arranged between the inner layer (16) and the outer layer (14) configured to preserve the temperature of the food.

8. The package according to claim 1, wherein the laminar body (1) has an essentially polygonal geometry.
